# EUROPÄISCHE PATENTSCHRIFT

(11) **EP 4 380 811 B1**
(45) Veröffentlichungstag und Bekanntmachung des Hinweises auf die Patenterteilung: **08.10.2025**
(21) Anmeldenummer: 22758514.8
(22) Anmeldetag: 01.08.2022
(51) Int. Cl.: B60K 35/10, B60K 35/22, B60K 35/23, B60K 35/28, B60K 35/29, B60K 35/60

(54) **ANZEIGESYSTEM FÜR EIN FAHRZEUG UND VERFAHREN ZUM OPTISCHEN HERVORHEBEN UNTERSCHIEDLICHER BEDIENZUSTÄNDE IM FAHRZEUG**
DISPLAY SYSTEM FOR A VEHICLE AND METHOD FOR OPTICALLY HIGHLIGHTING DIFFERENT OPERATING STATES IN THE VEHICLE
SYSTÈME D'AFFICHAGE POUR UN VÉHICULE ET PROCÉDÉ PERMETTANT DE METTRE EN ÉVIDENCE OPTIQUEMENT DIFFÉRENTS ÉTATS DE FONCTIONNEMENT DANS LE VÉHICULE

(30) Priorität: 04.08.2021 DE 102021208436
(43) Veröffentlichungstag der Anmeldung: 12.06.2024
(73) Patentinhaber: VOLKSWAGEN AKTIENGESELLSCHAFT, 38440 Wolfsburg (DE)
(72) Erfinder: TEBAIBI, Yannis, 38106 Braunschweig (DE); BOESE, Christoph, 38302 Wolfenbüttel (DE); WENGELNIK, Heino, 38442 Wolfsburg (DE); KUNZE, Alexander, 38118 Braunschweig (DE)
(86) Internationale Anmeldenummer: PCT/EP2022/071529
(87) Internationale Veröffentlichungsnummer: WO 2023/012097

(56) Entgegenhaltungen:
- EP-A1- 3 243 688
- EP-A1- 3 421 285
- US-A1- 2017 269 704

## Beschreibung

Die vorliegende Erfindung betrifft ein Anzeigesystem für ein Fahrzeug zum Anzeigen unterschiedlicher Betriebs- und Fahrparameter des Fahrzeugs auf unterschiedlichen Anzeigemitteln. Die Erfindung betrifft ferner ein Fahrzeug mit einem solchen Anzeigesystem und ein Verfahren zum optischen Hervorheben unterschiedlicher Bedienzustände in einem solchen Anzeigesystem. Außerdem betrifft die Erfindung ein Computerprogrammprodukt zum Durchführen eines solchen Verfahrens sowie ein Speichermittel, auf welchem ein solches Computerprogrammprodukt gespeichert ist.

Moderne Fahrzeugcockpits bieten eine Vielzahl von Anzeige- und Bedienmöglichkeiten. Bezogen auf die unmittelbare Fahrersichtachse werden zunehmend Head-Up Displays gemeinsam mit Kombinationsinstrumenten verbaut. Der Verbau von Head-Up Displays bietet Vorteile bezüglich Ergonomie und Fahrsicherheit. Beispielsweise erlauben Head-Up Displays die Wahrnehmung kritischer Informationen ohne Blickabwendung und mit geringer Akkommodation ausgehend von der Fahrszene. Kombinationsinstrumente bieten hingegen Vorteile bei der Darstellung komplexer Inhalte wie 3D-Karten oder Medien. Zudem kann alleinig mit Head-Up Displays nicht die permanente Sichtbarkeit gesetzesrelevanter Informationen gewährleistet werden, da die Kontrastwerte von der relativen Umgebungshelligkeit sowie anderen Faktoren wie dem Tragen von polarisierten Sonnenbrillen abhängen. Aufgrund der charakteristischen Vorteile beider Anzeigemittel ergeben sich das Erfordernis sowie das Kundenbedürfnis, in beiden Displays die jeweils geeigneten Funktionen darzustellen sowie zu bedienen. Da die Anzeigemittel keine zusammenhängende Fläche bilden, bedarf es einer Umschaltung zwischen den Anzeigemitteln, also einer Umschaltung zwischen einem ersten Bedienzustand zum Bedienen eines ersten Anzeigemittels und einem weiteren Bedienzustand zum Bedienen eines weiteren Anzeigemittels. Hierzu sind im Stand der Technik verschiedene Ansätze bekannt.

In manchen Fahrzeugen ist es möglich, im Menü einer zentralen Anzeige- und Bedieneinheit, die meist im Bereich einer Mittelkonsole des Fahrzeugs angeordnet ist, zwischen den möglichen Bedienzuständen umzuschalten. Eine solche Lösung gestaltet sich für den Fahrer jedoch umständlich und ungeeignet für die Anwendung während der Fahrt. Ferner sind Lösungen bekannt, bei welchen über eine Bedieneinheit am Lenkrad des Fahrzeugs zwischen den unterschiedlichen Bedienzuständen umgeschaltet werden kann. In der deutschen Patentanmeldung DE 10 2019 119 135 A1 wird beispielsweise ein System zur Verwendung einer Schaltwippe eines Lenkrades zum Umschalten zwischen Bedienzielen, wie einem Kombinationsinstrument und einem Head-Up Display, beschrieben. Ferner wird beschrieben, dass das Zuweisen eines Bedienelementes zu einem jeweiligen Bedienziel bzw. Anzeigemittel durch Ausgeben eines jeweils korrespondierenden optischen, akustischen und/oder haptischen Hinweises im Fahrzeug verdeutlicht werden kann. Der optische Hinweis kann insbesondere durch Ausgeben eines sogenannten Bedienfokus im zugehörigen Anzeigemittel umgesetzt werden. Insbesondere kann der Bedienfokus stets in demjenigen Bedienziel angezeigt werden, welches aktuell mittels der Bedieneinheit bedient werden kann. Der Bedienfokus kann mittels einer farblichen Veränderung und/oder einer Helligkeitsänderung und/oder einer Kontraständerung von Teilen oder des gesamten Inhalts des Displays des jeweils zugewiesenen Bedienziels realisiert werden. Ferner kann der Bedienfokus durch Einblenden eines Symbols, Einblenden eines Rahmens und/oder Ausgeben eines Textes im Display gesetzt werden.

Mithin sind im Stand der Technik bereits zahlreiche Ansätze zum Hervorheben des aktuell aktiven Anzeigemittels bekannt. Die Herausforderung bei der Darstellung eines geeigneten Bedienfokus bzw. eines geeigneten Hinweises zum Hervorheben des aktuell aktiven Anzeigemittels besteht nun darin, einen geeigneten Kompromiss zwischen Wahrnehmbarkeit durch den Nutzer und Störfaktor, insbesondere für den Fahrer, zu finden. Wird der Hinweis zu groß und/oder auffällig dargestellt, kann dies den Fahrer vom Fahrgeschehen ablenken. Wird der Hinweis zu klein und/oder unauffällig dargestellt, kann er ggf. nicht gut oder nur mit Ablenkung vom Fahrgeschehen erkannt werden, da der Fahrer danach suchen muss. In einem Head-Up Display sind bedingt durch Okklusion und Kontrastlimitationen zusätzliche Anzeigen möglichst zu vermeiden oder zu minimieren.

Die EP 3 243 688 A1 beschreibt ein Verfahren und eine Vorrichtung zur Zuordnung von Steuerbefehlen in einem Fahrzeug. Dabei werden Insassenblickinformationen erfasst und zur Steuerung eines Systemes wahlweise durch eine erste oder eine zweite Steuereinrichtung im Fahrzeug verwendet.

Die EP 3 421 285 A1 bezieht sich auf ein Schnittstellensystem für ein Fahrzeug und insbesondere auf ein Schnittstellensystem für ein Fahrzeug, das eine Schnittstellenvorrichtung verwendet, die abnehmbar an einer Anzeigefläche angebracht ist.

Die US 2017/0269704 A1 bezieht sich auf eine Anzeigevorrichtung für ein Fahrzeug umfassend einen ersten Anzeigeabschnitt zum Anzeigen von mindestens einer Karte, einen zweiten Anzeigeabschnitt zum Anzeigen von Informationen zum Bedienen eines Anzeigeinhalts des ersten Anzeigeabschnitts, einen Bedienabschnitt, einen Fahrzeuggeschwindigkeitserfassungsabschnitt zum Erfassen der Geschwindigkeit des Fahrzeugs und einen Steuerabschnitt.

Aufgabe der vorliegenden Erfindung ist es, der voranstehend beschriebenen Problematik zumindest teilweise Rechnung zu tragen. Insbesondere ist es Aufgabe der vorliegenden Erfindung, ein Verfahren und ein System zum wahrnehmbaren Hervorheben eines aktuellen Bedienzustandes zu schaffen, wobei mit möglichst geringer Ablenkung vom Fahrgeschehen eine ausreichend gute Wahrnehmbarkeit erzielt werden kann.

Die voranstehende Aufgabe wird durch die Patentansprüche gelöst. Insbesondere wird die voranstehende Aufgabe durch das Anzeigesystem gemäß Anspruch 1, das Fahrzeug gemäß Anspruch 7, das Verfahren gemäß Anspruch 8, das Computerprogrammprodukt gemäß Anspruch 9 sowie das Speichermittel gemäß Anspruch 10 gelöst. Weitere Vorteile der Erfindung ergeben sich aus den Unteransprüchen, der Beschreibung und den Figuren. Dabei gelten Merkmale, die im Zusammenhang mit dem Anzeigesystem beschrieben sind, selbstverständlich auch im Zusammenhang mit dem erfindungsgemäßen Fahrzeug, dem erfindungsgemäßen Verfahren, dem erfindungsgemäßen Computerprogrammprodukt, dem erfindungsgemäßen Speichermittel und jeweils umgekehrt, sodass bezüglich der Offenbarung zu den einzelnen Erfindungsaspekten stets wechselseitig Bezug genommen wird und/oder werden kann.

Gemäß einem ersten Aspekt der vorliegenden Erfindung wird ein Anzeigesystem für ein Fahrzeug vorgeschlagen. Das Anzeigesystem weist ein erstes Anzeigemittel zum Anzeigen von Informationen an einem ersten Ort im Fahrzeug und ein zweites Anzeigemittel zum Anzeigen von Informationen an einem zweiten, vom ersten Ort entfernten Ort im Fahrzeug, auf. Das Anzeigesystem weist ferner eine Bedieneinheit zum manuellen Bedienen des ersten Anzeigemittels und des zweiten Anzeigemittels auf, wobei die Bedieneinheit ein Umschaltmittel zum Umschalten zwischen einem ersten Bedienzustand, in welchem die Bedieneinheit zum manuellen Bedienen des ersten Anzeigemittels konfiguriert ist, und einem zweiten Bedienzustand, in welchem die Bedieneinheit zum manuellen Bedienen des zweiten Anzeigemittels konfiguriert ist, umfasst. Außerdem weist das Anzeigesystem ein Hinweismittel zum Erstellen eines optisch wahrnehmbaren ersten Hinweises auf dem ersten Anzeigemittel zum Hinweisen auf den ersten Bedienzustand und zum Erstellen eines optisch wahrnehmbaren zweiten Hinweises auf dem zweiten Anzeigemittel zum Hinweisen auf den zweiten Bedienzustand, auf. Die Bedieneinheit umfasst zudem ein Betätigungsmittel zum optischen Hervorheben des ersten Bedienzustandes und des zweiten Bedienzustandes durch optisches Verändern des ersten Hinweises im ersten Bedienzustand und/oder des zweiten Hinweises im zweiten Bedienzustand durch manuelle Betätigung des Betätigungsmittels.

Im Rahmen der vorliegenden Erfindung wurde erkannt, dass der gewünschte Kompromiss zwischen guter Wahrnehmbarkeit und geringem Stör- bzw. Ablenkungsfaktor dadurch erreicht werden kann, dass ein bereits vorhandener Hinweis bzw. Bedienfokus mit geringem Ablenkungsfaktor bei Bedarf nochmals hervorgehoben werden kann. Das heißt, liegt der erste Bedienzustand vor bzw. befindet sich das erste Anzeigemittel bereits im sogenannten Bedienfokus, kann der visualisierte Hinweis zum Anzeigen des Bedienfokus nochmals verändert, insbesondere verstärkt, werden. Bei den im Stand der Technik bekannten Lösungen wurde der Bedienfokus zwar durch visuell wahrnehmbare Veränderungen auf dem ausgewählten Anzeigemittel kenntlich gemacht, eine weitere visuelle Veränderung war jedoch nicht mehr vorgesehen. Damit musste man sich bislang zwischen besserer Wahrnehmbarkeit und höherem Ablenkungsfaktor entscheiden. Durch das erfindungsgemäße Anzeigesystem kann beiden Wünschen gleichermaßen Rechnung getragen werden. Es ist lediglich eine einfache Betätigungsaktion des Fahrers und/oder eines Nutzers des Anzeigesystems erforderlich.

Unter dem ersten Bedienzustand kann ein Zustand verstanden werden, in welchem sich das erste Anzeigemittel im Bedienfokus befindet. Unter dem zweiten Bedienzustand kann ein Zustand verstanden werden, in welchem sich das zweite Anzeigemittel im Bedienfokus befindet. Unter dem zweiten Anzeigemittel kann wenigstens ein weiteres Anzeigemittel verstanden werden. Das heißt, das Anzeigesystem ist nicht auf zwei Anzeigemittel beschränkt zu betrachten. So kann das Anzeigesystem auch ein drittes oder viertes Anzeigemittel aufweisen, wobei das Umschaltmittel entsprechend zum Umschalten zwischen drei, vier oder mehr verschiedenen Bedienzuständen, in welchen jeweils nur ein Anzeigemittel im Bedienfokus steht, konfiguriert sein kann. Das Betätigungsmittel ist in einem solchen Fall zum optischen Hervorheben des jeweiligen Bedienzustandes durch optisches Verändern des jeweiligen Hinweises konfiguriert.

Befindet sich die Bedieneinheit im ersten Bedienzustand, ist die Bedieneinheit zum manuellen Durchführen einer Standardbedienung des ersten Anzeigemittels, also zum Durchführen einer bestimmungsgemäßen Bedienung des ersten Anzeigemittels, konfiguriert. Befindet sich die Bedieneinheit im zweiten Bedienzustand, ist die Bedieneinheit zum manuellen Durchführen einer Standardbedienung des zweiten Anzeigemittels, also zum Durchführen einer bestimmungsgemäßen Bedienung des zweiten Anzeigemittels, konfiguriert. Unter einer Standardbedienung ist insbesondere nicht oder nicht nur das Aktivieren und/oder Deaktivieren des jeweiligen Anzeigemittels zu verstehen. Das Verändern des jeweiligen Hinweises kann folglich als Verstärken eines Fokuseffekts und/oder als Verstärken des Bedienfokus verstanden werden. Unter dem Verändern des jeweiligen Hinweises kann ein Verändern der Form, der Größe, des Kontrasts, der Farbe, der Helligkeit und/oder der Position des Hinweises verstanden werden. Eine solche Änderung wird jedoch nur auf Wunsch des Nutzers bzw. unter Verwendung des Betätigungsmittels vorgenommen. Bis dahin wird der Bedienfokus lediglich durch die Grundform des optischen Hinweises umgesetzt.

Im ersten Bedienzustand ist die Bedieneinheit vorzugsweise zum ausschließlichen oder überwiegenden Bedienen des ersten Anzeigemittels konfiguriert und im zweiten Bedienzustand ist die Bedieneinheit vorzugsweise zum ausschließlichen oder überwiegenden Bedienen des zweiten Anzeigemittels konfiguriert. Das heißt, im ersten Bedienzustand kann durch die Bedieneinheit bzw. das Umschaltmittel zwar wieder zurück in den zweiten Bedienzustand geschaltet werden und es sind ggf. auch einfache Bedienfunktionen für das zweite Anzeigemittel, wie beispielsweise das Annehmen eines am zweiten Anzeigemittels angezeigten Anrufs, möglich. Die Hauptfunktionen und/oder ein Großteil der Bedienfunktionalität der Bedieneinheit steht im ersten Bedienzustand allerdings ausschließlich für das erste Anzeigemittel zur Verfügung. Dasselbe gilt auf analoge Weise für den zweiten Bedienzustand und das zweite Anzeigemittel.

Das erste Anzeigemittel und das zweite Anzeigemittel können jeweils einen Bildschirm aufweisen und/oder konfiguriert sein, einen Bildschirm zum Anzeigen von digitalen Informationen darzustellen und/oder aufzuweisen. Das erste Anzeigemittel und das zweite Anzeigemittel sind im dreidimensionalen Raum des Fahrzeugs beabstandet voneinander positioniert. Bevorzugt weisen das erste Anzeigemittel einen physischen Bildschirm im Fahrzeug und das zweite Anzeigemittel ein Head-Up Display auf. Das erste Anzeigemittel ist insbesondere in Form eines Kombinationsinstrumentes ausgestaltet oder kann ein Kombinationsinstrument aufweisen.

Die Bedieneinheit kann mechanische und/oder haptische Bedienelemente in Form von Knöpfen und/oder einer Schaltwalze, und/oder berührungsempfindliche und/oder kapazitive Bedienelemente in Form eines Touch-Displays bzw. eines Touchpanels, aufweisen. Die Bedieneinheit ist vorzugsweise in Form einer Lenkrad-Bedieneinheit und/oder einer zur Installation in einem Lenkrad des Fahrzeugs geeigneten Bedieneinheit ausgestaltet. Hierzu kann die Bedieneinheit insbesondere eine Kreuzwippe aufweisen. Wenigstens ein Teil einer solchen Kreuzwippe und/oder wenigstens ein Teil der vorstehend beschriebenen Bedienelemente können das Betätigungsmittel und/oder das Umschaltmittel bilden. So weist das Umschaltmittel insbesondere richtungsbezogene Tasten, vorzugsweise in Form einer Kreuzwippe, zum Umschalten zwischen den unterschiedlichen Bedienzuständen auf. Das Betätigungsmittel kann ein zentral in der Kreuzwippe ausgestaltetes Betätigungselement zum optischen Hervorheben des jeweiligen Bedienzustandes aufweisen oder als Teil der richtungsbezogenen Tasten der Bedieneinheit und/oder des Umschaltmittels konfiguriert sein.

Das Hinweismittel ist zum Erstellen des jeweiligen Hinweises vorzugweise durch die Bedieneinheit betätigbar und/oder ansteuerbar. Das heißt, ein Nutzer kann durch manuelle Betätigung bzw. Bedienung der Bedieneinheit das Hinweismittel ansteuern, um den ersten oder den zweiten Hinweis zu erstellen. Das Hinweismittel ist somit bevorzugt in Form wenigstens einer elektrischen Schaltung, einer digitalen Schaltung und/oder einer entsprechenden Kontrolleinheit zum Erstellen des jeweiligen Hinweises konfiguriert. Vorzugsweise ist das Hinweismittel zum Erstellen des optisch wahrnehmbaren ersten Hinweises in Form einer geraden Linie, insbesondere direkt unterhalb oder oberhalb einer aktuell angezeigten Fahrzeuggeschwindigkeit, auf dem ersten Anzeigemittel und/oder zum Erstellen des optisch wahrnehmbaren zweiten Hinweises in Form einer geraden Linie, insbesondere direkt unterhalb oder oberhalb einer aktuell angezeigten Fahrzeuggeschwindigkeit, auf dem zweiten Anzeigemittel konfiguriert. Ein solcher linienförmiger Hinweis stellt einen vorteilhaften Kompromiss aus ausreichender Wahrnehmbarkeit und geringem Störfaktor dar.

Die Bedieneinheit und das Umschaltmittel können dieselben Betätigungselemente aufweisen. So kann die Bedieneinheit richtungsbezogene Betätigungselemente zum Bedienen der Anzeigemittel aufweisen, wobei diese Betätigungselemente, beispielsweise in Form von Pfeiltasten, auch zum Umschalten zwischen den verschiedenen Bedienzuständen konfiguriert sein können.

Gemäß einer weiteren Ausführungsform der vorliegenden Erfindung ist es möglich, dass bei einem Anzeigesystem das Betätigungsmittel zum optischen Hervorheben des ersten Bedienzustandes und des zweiten Bedienzustandes durch ein Aufleuchten des ersten Hinweises im ersten Bedienzustand und/oder des zweiten Hinweises im zweiten Bedienzustand durch manuelle Betätigung des Betätigungsmittels konfiguriert ist. Das heißt, durch Betätigen des Betätigungsmittels ist es möglich, den ersten Hinweis im ersten Bedienzustand aufleuchten zu lassen und den zweiten Hinweis im zweiten Bedienzustand aufleuchten zu lassen. Unter dem Aufleuchten kann ein Glow bzw. ein Glow-Effekt, also eine gezielte Helligkeitssteigerung in einem Randbereich des jeweiligen Hinweises, zum Hervorheben des Hinweises, verstanden werden. Eine solche Veränderung des Hinweises weist eine ausreichend hohe Wahrnehmbarkeit auf, ohne zu sehr vom Umgebungsgeschehen im Straßenverkehr abzulenken. Versuche im Rahmen der vorliegenden Erfindung haben ergeben, dass ein erfindungsgemäßes Aufleuchten einen deutlich geringeren Störfaktor als beispielsweise eine Veränderung der Größe und/oder der Position des Hinweises darstellt.

Weiterhin ist es möglich, dass bei einem Anzeigesystem gemäß der vorliegenden Erfindung die Bedieneinheit zum Bedienen des ersten Anzeigemittels und/oder zum Bedienen des zweiten Anzeigemittels durch manuelles Aufbringen eines ersten Drucks auf die Bedieneinheit konfiguriert ist und das Betätigungsmittel zum optischen Hervorheben des ersten Bedienzustandes und des zweiten Bedienzustandes durch manuelles Aufbringen eines zweiten Drucks auf das Betätigungsmittel, der niedriger als der erste Druck ist, konfiguriert ist. Damit kann eine Art Hover-Feature zur Verfügung gestellt werden, mittels welchem der Bedienfokus auf die erfindungsgemäße Weise dem Nutzer gegenüber bei Bedarf salienter kommuniziert werden kann, indem mit dem Finger nur leicht über das Betätigungsmittel bzw. einen Teil der Bedieneinheit gestrichen werden muss oder der Finger nur kurz auf dem Betätigungsmittel aufgelegt werden muss, ohne nennenswerten Druck auf das Betätigungsmittel aufzubauen. Das Betätigungsmittel kann, beispielsweise in Form eines mittig positionierten Bedienelementes, in einer richtungsbezogenen Bedieneinheit, mittig in und/oder an der Bedieneinheit positioniert sein. Gleichwohl kann das Betätigungsmittel auch als Teil von richtungsbezogenen Pfeiltasten der Bedieneinheit und/oder des Umschaltmittels, dezentral und/oder entfernt von einem Hauptkörper der Bedieneinheit, der beispielsweise das Umschaltmittel umfasst, positioniert sein. Das Betätigungsmittel kann hierbei in Form eines Knopfes, einer Auswahlwalze oder eines berührungsempfindlichen bzw. kapazitiven Touchpanels ausgestaltet sein.

Gemäß einer weiteren Ausgestaltungsvariante der vorliegenden Erfindung ist es möglich, dass das Umschaltmittel wenigstens ein Betätigungselement zum Umschalten zwischen den beiden Bedienzuständen und das Betätigungsmittel dasselbe wenigstens eine Betätigungselement zum optischen Hervorheben der Bedienzustände aufweist, wobei das wenigstens eine Betätigungselement konfiguriert ist, durch manuelles Aufbringen eines ersten Drucks auf das wenigstens eine Betätigungselement zwischen den Bedienzuständen umzuschalten und durch manuelles Aufbringen eines zweiten Drucks, der niedriger als der erste Druck ist, die Bedienzustände optisch hervorzuheben. Das wenigstens eine Betätigungsmittel kann demnach mit einer sogenannten Force-Touch-Funktion und/oder einer druckabhängigen Schaltfunktion konfiguriert sein. Eine solche Funktion ist beispielsweise aus aktuellen Smartphones im TouchDisplay sowie bei Kamerasystemen in einem Auslöser, bei welchem abhängig vom Druckpunkt des Auslösers fokussiert oder fotografiert werden kann, bekannt. Durch die Implementierung in das vorgeschlagene Anzeigesystem können die verschiedenen Funktionsbauteile platzsparend und insbesondere intuitiv verwendbar zur Verfügung gestellt werden. Unter dem wenigstens einen Betätigungselement kann ein zentraler Knopf bzw. eine zentrale Bedieneinheit innerhalb einer Schaltwippe und/oder eines Schaltkreuzes verstanden werden. Unter dem wenigstens einen Betätigungselement kann jedoch auch die gesamte Schaltwippe bzw. das gesamte Schaltkreuz einschließlich der unterschiedlichen Betätigungselemente verstanden werden, bei welchem mittels Pfeiltasten und dem ersten Druck zwischen den Bedienzuständen umgeschaltet werden kann und bei Aufbringung des zweiten, geringeren Drucks auf eine der Pfeiltasten bzw. auf eines der Betätigungselemente das optische Hervorheben des jeweiligen Hinweises ausgelöst werden kann. Mit anderen Worten, durch eine Veränderung der Kapazität kann eine Berührung ohne Überschreiten einer Druckschwelle identifiziert werden. Wird eine solche Berührung erkannt, kann beispielsweise der Hinweis hervorgehoben werden. Zur Ausführung eines Fokuswechsels muss hingegen eine vordefinierte oder vordefinierbare Druckschwelle überschritten werden.

Ein erfindungsgemäßes Anzeigesystem kann ferner ein vom ersten Anzeigemittel und vom zweiten Anzeigemittel beabstandetes drittes Anzeigemittel zum Erstellen eines optisch wahrnehmbaren Hinweises zum Hinweisen auf ein Umschalten zwischen dem ersten Bedienzustand und dem zweiten Bedienzustand, zum Hinweisen auf den ersten Bedienzustand und/oder zum Hinweisen auf den zweiten Bedienzustand, aufweisen. Der durch das dritte Anzeigemittel erzeugte Hinweis kann als optional wahrnehmbarer Hinweis verstanden werden, den ein Nutzer des Anzeigesystems zum Erkennen des aktuellen Bedienzustandes wahrnehmen kann, aber nicht muss. Der Hinweis auf dem dritten Anzeigemittel kann demnach relativ frei, also groß, klein, besonders hell, oder besonders dunkel dargestellt werden. Das dritte Anzeigemittel kann in Form eines in der Mittelkonsole ausgestalteten Bildschirms konfiguriert sein. Auf einem solchen Anzeigemittel kann beispielsweise auch ein Beifahrer gut den aktuellen Bedienfokus bzw. Bedienzustand erkennen. Dies kann insbesondere dann von Vorteil sein, wenn der Fahrer noch unerfahren ist und der Beifahrer als beaufsichtigende Begleitperson den aktuellen Bedienzustand schnell und einfach erkennen möchte. Zusätzlich oder alternativ kann das dritte Anzeigemittel ein bildschirmunabhängiges Anzeigemittel, wie beispielsweise ein Lichtband und/oder einzelne LEDs, aufweisen.

Darüber hinaus ist es möglich, dass ein erfindungsgemäßes Anzeigesystem ein Leuchtmittel zum Erzeugen eines Lichtpfads vom ersten Anzeigemittel zum zweiten Anzeigemittel beim Umschalten vom ersten Anzeigemittel auf das zweite Anzeigemittel sowie zum Erzeugen eines Lichtpfads vom zweiten Anzeigemittel zum ersten Anzeigemittel beim Umschalten vom zweiten Anzeigemittel auf das erste Anzeigemittel aufweist. Mit Hilfe eines solchen Lichtpfades und/oder einer entsprechenden Lichtleitvorrichtung kann die Aufmerksamkeit des Fahrers bzw. eines Nutzers des Anzeigesystems während des Umschaltens deutlich wahrnehmbar auf das aktivierte Anzeigemittel bzw. das Anzeigemittel im Bedienfokus gelenkt werden. Damit können auch ohne wahrgenommenen Hinweis im Anzeigemittel Situationen verhindert werden, in welchen dem Nutzer nicht klar ist, ob vom ersten Bedienzustand in den zweiten Bedienzustand oder vom zweiten Bedienzustand in den ersten Bedienzustand umgeschaltet wurde. Der Lichtpfad kann direkt oder mit Umwegen vom ersten Anzeigemittel zum zweiten Anzeigemittel sowie vom zweiten Anzeigemittel zum ersten Anzeigemittel erzeugt werden. Zum Erzeugen des Lichtpfades weist das Leuchtmittel vorzugsweise linienförmige Leuchtelemente auf und/oder ist wenigstens teilweise als linienförmiges Leuchtmittel ausgestaltet.

Gemäß einem weiteren Aspekt der vorliegenden Erfindung wird ein Fahrzeug mit einem Lenkrad und einem wie vorstehend beschriebenen Anzeigesystem zur Verfügung gestellt, wobei die Bedieneinheit und/oder das Betätigungsmittel am Lenkrad installiert sind. Ein solches Fahrzeug ist vorzugsweise in Form eines Straßenfahrzeugs, insbesondere in Form eines PKW oder LKW, ausgestaltet. Gleichwohl kann das Fahrzeug auch als Schienenfahrzeug, Luftfahrzeug, Wasserfahrzeug oder Roboter ausgestaltet sein. Ein weiterer Aspekt der vorliegenden Erfindung betrifft ein Verfahren zum optischen Hervorheben unterschiedlicher Bedienzustände in einem, wie vorstehend beschriebenen, Anzeigesystem eines Fahrzeugs. Das Verfahren weist die folgenden Schritte auf:
- Umschalten zwischen dem ersten Bedienzustand und dem zweiten Bedienzustand zum Erstellen eines optisch wahrnehmbaren ersten Hinweises auf dem ersten Anzeigemittel zum Hinweisen auf den ersten Bedienzustand oder eines optisch wahrnehmbaren zweiten Hinweises auf dem zweiten Anzeigemittel zum Hinweisen auf den zweiten Bedienzustand, und
- optisches Verändern des ersten Hinweises im ersten Bedienzustand zum optischen Hervorheben des ersten Bedienzustandes oder optisches Verändern des zweiten Hinweises im zweiten Bedienzustand zum optischen Hervorheben des zweiten Bedienzustandes.

Damit bringen das erfindungsgemäße Fahrzeug und das erfindungsgemäße Verfahren die gleichen Vorteile mit sich, wie sie ausführlich mit Bezug auf das erfindungsgemäße Anzeigesystem beschrieben worden sind.

Gemäß einem weiteren Aspekt der Erfindung wird ein Computerprogrammprodukt vorgeschlagen, das Befehle umfasst, die bei der Ausführung des Computerprogrammprodukts durch einen Computer diesen veranlassen, das beschriebene Verfahren unter Verwendung eines, wie vorstehend beschriebenen, Anzeigesystems auszuführen. Zudem wird ein computerlesbares Speichermittel zur Verfügung gestellt, auf dem ein solches Computerprogrammprodukt gespeichert ist. Das Speichermittel ist vorzugsweise in Form eines nichtflüchtigen Speichermittels konfiguriert. Damit bringen auch das erfindungsgemäße Computerprogrammprodukt und das erfindungsgemäße Speichermittel die vorstehend beschriebenen Vorteile mit sich.

Das Computerprogrammprodukt kann als computerlesbarer Anweisungscode in jeder geeigneten Programmiersprache und/oder Maschinensprache wie beispielsweise in JAVA, C++, C# und/oder Python implementiert sein. Das Computerprogrammprodukt kann auf einem computerlesbaren Speichermedium wie einer Datendisk, einem Wechsellaufwerk, einem flüchtigen oder nichtflüchtigen Speicher, oder einem eingebauten Speicher/Prozessor abgespeichert sein. Der Anweisungscode kann den Computer oder andere programmierbare Geräte wie ein Fahrzeugsteuergerät derart programmieren, dass die gewünschten Funktionen ausgeführt werden. Ferner kann das Computerprogrammprodukt in einem Netzwerk, wie beispielsweise dem Internet, bereitgestellt werden und/oder sein, von dem es bei Bedarf von einem Nutzer heruntergeladen werden kann. Das Computerprogrammprodukt kann sowohl mittels einer Software, als auch mittels einer oder mehrerer spezieller elektronischer Schaltungen, das heißt in Hardware oder in beliebig hybrider Form, das heißt mittels Software-Komponenten und Hardware-Komponenten, realisiert werden und/oder sein.

Weitere, die Erfindung verbessernde Maßnahmen ergeben sich aus der nachfolgenden Beschreibung zu verschiedenen Ausführungsbeispielen der Erfindung, welche in den Figuren schematisch dargestellt sind. Sämtliche aus den Ansprüchen, der Beschreibung oder den Figuren hervorgehende Merkmale und/oder Vorteile, einschließlich konstruktiver Einzelheiten und räumlicher Anordnungen können sowohl für sich als auch in den verschiedenen Kombinationen erfindungswesentlich sein.

Es zeigen jeweils schematisch:
- Figur 1: eine Darstellung zum Erläutern eines Anzeigesystems gemäß einer ersten Ausführungsform der vorliegenden Erfindung in einem ersten Bedienzustand,
- Figur 2: eine Darstellung zum Erläutern eines Umschaltens zwischen zwei Bedienzuständen in einem Anzeigesystems gemäß der ersten Ausführungsform der vorliegenden Erfindung,
- Figur 3: eine Darstellung zum Erläutern eines Anzeigesystems gemäß der ersten Ausführungsform der vorliegenden Erfindung in einem zweiten Bedienzustand,
- Figur 4: einen Fahrzeuginnenraum zum Erläutern des erfindungsgemäßen Anzeigesystems,
- Figur 5: ein Fahrzeug mit einem erfindungsgemäßen Anzeigesystem,
- Figur 6: ein Speichermittel mit einem darauf gespeicherten Computerprogrammprodukt, und
- Figur 7: ein Flussdiagramm zum Erläutern eines erfindungsgemäßen Verfahrens.

Elemente mit gleicher Funktion und Wirkungsweise sind in den Figuren jeweils mit den gleichen Bezugszeichen versehen.

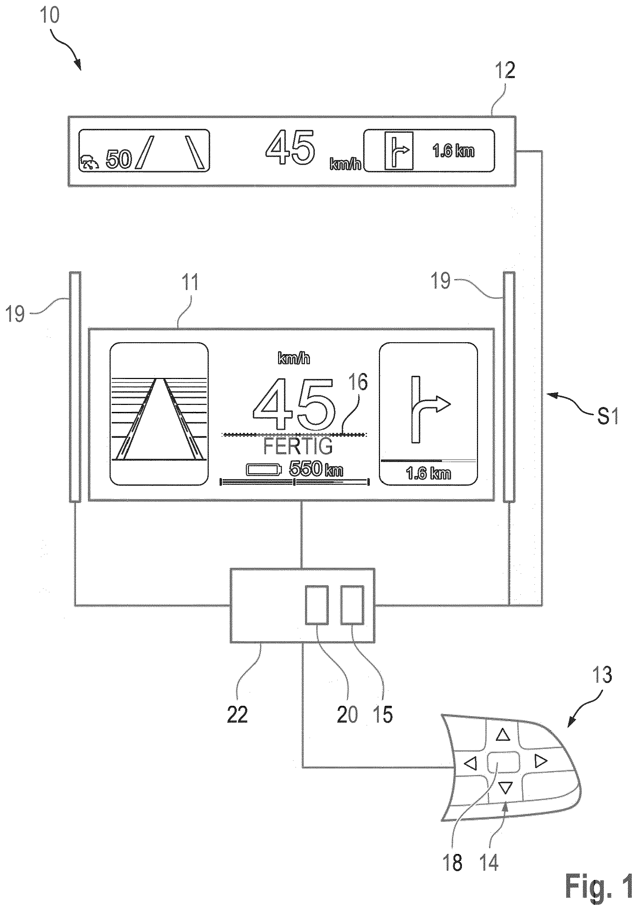

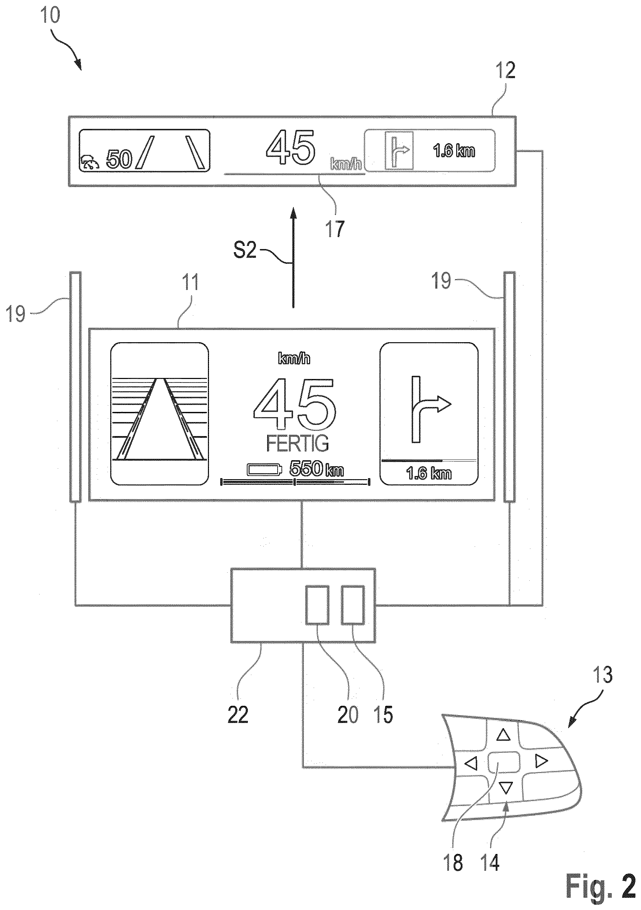

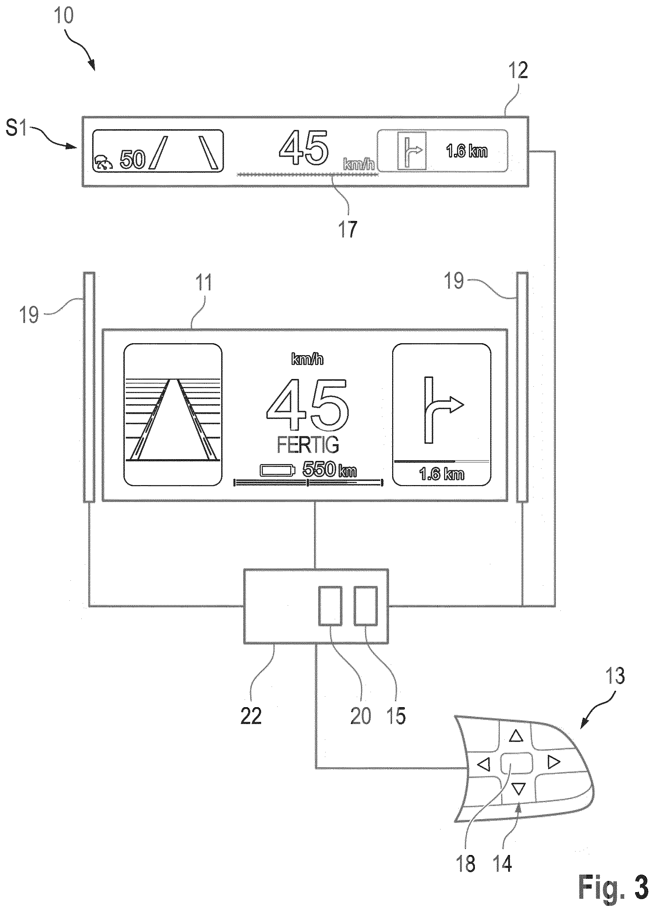

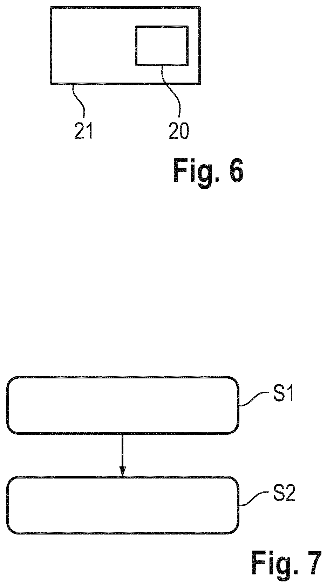

In Fig. 1 ist ein Anzeigesystem 10 für ein in Fig. 7 gezeigtes Fahrzeug 50 dargestellt. Das Anzeigesystem 10 weist ein erstes Anzeigemittel 11 zum Anzeigen von Informationen an einem ersten Ort im Fahrzeug 50 und ein zweites Anzeigemittel 12 zum Anzeigen von Informationen an einem zweiten, vom ersten Ort entfernten Ort im Fahrzeug 50, auf. Das erste Anzeigemittel 11 ist in Form eines Kombinationsinstruments ausgestaltet und das zweite Anzeigemittel 12 ist in Form eines Head-Up Displays konfiguriert bzw. visualisiert. Das gezeigte Anzeigesystem 10 weist ferner eine Bedieneinheit 13 zum manuellen Bedienen des ersten Anzeigemittels 11 und des zweiten Anzeigemittels 12 auf, wobei die Bedieneinheit 13 ein Umschaltmittel 14 zum Umschalten zwischen einem in Fig. 1 gezeigten ersten Bedienzustand S1, in welchem die Bedieneinheit 13 zum manuellen Bedienen des ersten Anzeigemittels 11 konfiguriert ist, und einem in Fig. 2 und Fig. 3 gezeigten zweiten Bedienzustand S2, in welchem die Bedieneinheit 13 zum manuellen Bedienen des zweiten Anzeigemittels 12 konfiguriert ist, aufweist. Die Bedieneinheit 13 ist in Form einer Kreuzwippe eines Lenkrades 24 bzw. für ein solches Lenkrad 24 des Fahrzeugs 50 konfiguriert. Das Umschaltmittel 14 ist in Form der Pfeiltasten der Bedieneinheit 13 ausgestaltet bzw. weist diese zum Umschalten zwischen den beiden Bedienzuständen S1, S2 auf. Im vorliegenden Beispiel kann durch die nach oben zeigende Pfeiltaste aus dem ersten Bedienzustand S1 in den zweiten Bedienzustand S2 geschaltet werden und durch die nach unten zeigende Pfeiltaste kann aus dem zweiten Bedienzustand S2 in den ersten Bedienzustand S1 geschaltet werden. Demnach besteht bei Umschaltung zwischen dem ersten Anzeigemittel 11 bzw. dem ersten Bedienzustand S1 und dem zweiten Anzeigemittel 12 bzw. dem zweiten Bedienzustand S2 ein räumlicher sowie ikonografischer Zusammenhang zwischen der Umschaltbewegung (von unten nach oben und von oben nach unten), der Tastenpositionierung (oben und unten auf der Kreuzwippe bzw. der Bedieninsel) und den Tastensymbolen (Pfeile/Dreiecke nach oben/unten). Damit kann das Anzeigesystem besonders intuitiv bedient werden.

Das Anzeigesystem 10 weist zudem ein Hinweismittel 15 zum Erstellen eines optisch wahrnehmbaren ersten Hinweises 16 auf dem ersten Anzeigemittel 11 zum Hinweisen auf den ersten Bedienzustand S1 und zum Erstellen eines optisch wahrnehmbaren zweiten Hinweises 17 auf dem zweiten Anzeigemittel 12 zum Hinweisen auf den zweiten Bedienzustand S2 auf. Das Hinweismittel 15 ist in Form einer digitalen Schaltkomponente eines Computers 22 konfiguriert, wobei der Computer 22 in Form eines Fahrzeugsteuergerätes bereitgestellt ist. Der erste Hinweis 16 wird in Form einer Linie unterhalb der Fahrzeuggeschwindigkeit dargestellt. Auf den in Fig. 1 gezeigten ersten Bedienzustand S1 wird also durch den ersten Hinweis 16 in Form eines Striches bzw. einer Linie unterhalb der Fahrzeuggeschwindigkeit hingewiesen.

Wie in Fig. 1 gezeigt, weist die Bedieneinheit 13 ferner ein Betätigungsmittel 18 zum optischen Hervorheben des ersten Bedienzustandes S1 und des zweiten Bedienzustandes S2 durch optisches Verändern des ersten Hinweises 16 im ersten Bedienzustand S1 und des zweiten Hinweises 17 im zweiten Bedienzustand S2 durch manuelle Betätigung des Betätigungsmittels 18 auf. Im gezeigten Beispiel ist das Betätigungsmittel 18 in Form eines zentralen Betätigungselementes mittig zu den Pfeiltasten ausgestaltet. Fig. 1 zeigt einen ersten Bedienzustand S1, in welchem das Betätigungsmittel 18 manuell betätigt wird oder wurde und dadurch der erste Hinweis 16 optisch verändert wird. Genauer gesagt wird der erste Hinweis 16 dahingehend verändert, dass ein sogenannter Glow-Effekt der Linie erzeugt wird, der erste Hinweis 16 bzw. die Umrandung der Linie also aufleuchtet. Gemäß einer alternativen, nicht in einer separaten Figur dargestellten Ausführungsform, ist es möglich, dass das Betätigungsmittel 18 dieselben beiden Betätigungselemente wie das Umschaltmittel 14, vorliegend also die Pfeiltaste nach oben und die Pfeiltaste nach unten, zum optischen Hervorheben der Bedienzustände S1, S2 aufweist. In diesem Fall sind die beiden Betätigungselemente, also die Pfeiltasten, konfiguriert, durch manuelles Aufbringen eines ersten Drucks zwischen den Bedienzuständen S1, S2 umzuschalten und durch manuelles Aufbringen eines zweiten Drucks, der niedriger als der erste Druck ist, die Bedienzustände S1, S2 optisch hervorzuheben. Auf analoge Weise ist auch eine Ausführungsform mit nur einem kapazitivem Touchdisplay bzw. Touchpanel, also ohne Pfeiltasten, möglich, bei welchem durch leichtes Auflegen eines Fingers der aktuelle Bedienzustand S1, S2 hervorgehoben werden kann und, bei stärkerem Aufdrücken bzw. bei Überschreiten einer vordefinierten Druckkraft, zwischen den beiden Bedienzuständen S1, S2 umgeschaltet bzw. hin und her geschaltet werden kann. Ein solches Touchpanel kann beispielsweise in der Mitte des in Fig. 1 gezeigten Schaltkreuzes ausgestaltet sein.

In Fig. 1 ist ferner ein Leuchtmittel 19 in Form von zwei Lichtstreifen zum Erzeugen eines Lichtpfades vom ersten Anzeigemittel 11 bzw. von einem Bereich in der Nähe des ersten Anzeigemittels 11 in Richtung des zweiten Anzeigemittels 12 beim Umschalten vom ersten Anzeigemittel 11 auf das zweite Anzeigemittel 12 sowie zum Erzeugen eines Lichtpfades vom zweiten Anzeigemittel 12 bzw. von einem Bereich in der Nähe des zweiten Anzeigemittels 12 in Richtung des ersten Anzeigemittels 11 beim Umschalten vom zweiten Anzeigemittel 12 auf das erste Anzeigemittel 11. Die beiden Lichtstreifen sind nur symbolisch für ein Leuchtmittel 19 zu betrachten, das einen Übergang zwischen den beiden Bedienzuständen S1, S2 im Fahrzeug 50 außerhalb der beiden Anzeigemittel 11, 12 visuell unterstützt und dem Nutzer dadurch mit besonderer Deutlichkeit die Richtung des Umschaltens zu Verstehen gibt. Auf dem Computer 22 des dargestellten Anzeigesystems 10 ist ein Computerprogrammprodukt 20 installiert, das Befehle umfasst, die bei der Ausführung des Computerprogrammprodukts 20 durch den Computer 22 diesen veranlassen, das später mit Bezug auf Fig. 7 beschriebene Verfahren unter Verwendung des Anzeigesystems 10 auszuführen.

Bei dem in Fig. 2 gezeigten Anzeigesystem 10 wurde von dem in Fig. 1 gezeigten ersten Bedienzustand S1 in den zweiten Bedienzustand S2 umgeschaltet, in welchem die Bedieneinheit 13 vorzugsweise zum Bedienen des zweiten Anzeigemittels 12 in Form des Head-Up Displays konfiguriert ist. Im zweiten Bedienzustand S2 liegt der Bedienfokus also auf dem zweiten Anzeigemittel 12. Der zweite Hinweis wird bzw. wurde jedoch noch nicht hervorgehoben. Dies wird bzw. wurde erst im zweiten Bedienzustand S2 gemäß Fig. 3 vorgenommen.

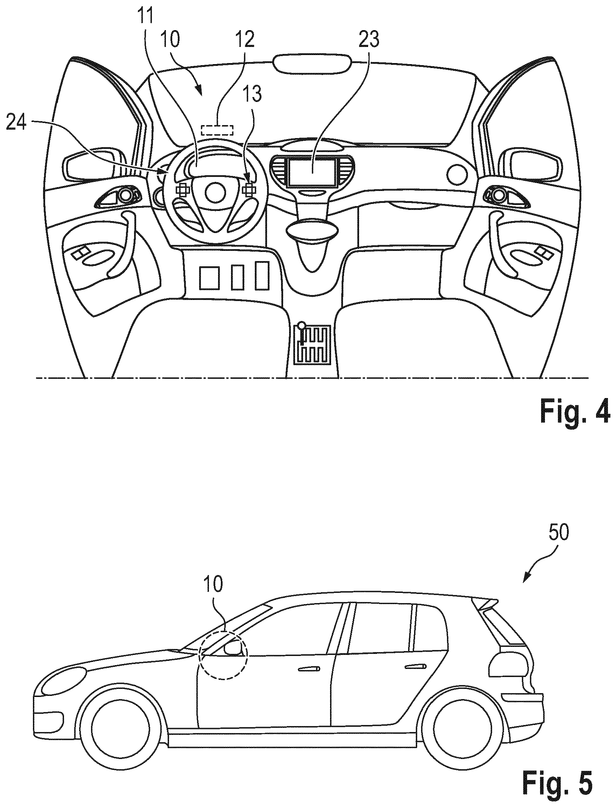

Fig. 4 zeigt einen Fahrzeuginnenraum des Fahrzeugs 50 mit dem vorstehend beschriebenen ersten Anzeigemittel 11, dem zweiten Anzeigemittel 12 und einem dritten Anzeigemittel 23. Das dritte Anzeigemittel 23 ist beabstandet vom ersten Anzeigemittel 11 und beabstandet vom zweiten Anzeigemittel 12 in Form eines Displays bzw. eines Bildschirms der Mittelkonsole ausgestaltet und zum Erstellen eines optisch wahrnehmbaren Hinweises zum Hinweisen auf ein Umschalten zwischen dem ersten Bedienzustand S1 und dem zweiten Bedienzustand S2, zum Hinweisen auf den ersten Bedienzustand S1 sowie zum Hinweisen auf den zweiten Bedienzustand S2 konfiguriert. Unter dem dritten Anzeigemittel 23 kann somit eine weitere Kontrollinstanz zum Kontrollieren und/oder Prüfen des aktuellen Bedienzustandes S1, S2 bzw. Bedienfokus verstanden werden.

In Fig. 5 ist ein Fahrzeug 50 in Form eines PKWs dargestellt, das bzw. der ein, wie vorstehend im Detail beschriebenes, Anzeigesystem 10 aufweist, bei welchem die Bedieneinheit 13 und das Betätigungsmittel 18 an einem Lenkrad 24 des Fahrzeugs 50 installiert sind.

Fig. 6 zeigt ein nichtflüchtiges und computerlesbares Speichermittel 21, auf dem ein, wie bereits zu Fig. 1 beschriebenes, Computerprogrammprodukt 20 zum Ausführen des nachfolgend beschriebenen Verfahrens gespeichert ist.

Fig. 7 zeigt ein Flussdiagramm zum Erläutern eines Verfahrens zum optischen Hervorheben unterschiedlicher Bedienzustände S1, S2 in einem, wie vorstehend beschriebenen, Anzeigesystem 10 eines Fahrzeugs 50. Kern des Verfahrens ist es, dass in einem ersten Schritt S1 zunächst zwischen dem ersten Bedienzustand S1 und dem zweiten Bedienzustand S2 unter Verwendung des Hinweismittels 15 zum Erstellen eines optisch wahrnehmbaren ersten Hinweises 16 auf dem ersten Anzeigemittel 11 zum Hinweisen auf den ersten Bedienzustand S1 oder eines optisch wahrnehmbaren zweiten Hinweises 17 auf dem zweiten Anzeigemittel 12 zum Hinweisen auf den zweiten Bedienzustand S2 umgeschaltet wird. Liegt einer der beiden Bedienzuständen S1, S2 vor und wird dies mit einem entsprechend erstellten Hinweis 16, 17 visuell verdeutlicht, wird in einem zweiten Schritt S2 der erste Hinweis 16 im ersten Bedienzustand S1 zum optischen Hervorheben des ersten Bedienzustandes S1 oder der zweite Hinweis 17 im zweiten Bedienzustand S2 zum optischen Hervorheben des zweiten Bedienzustandes S2 optisch verändert. So können der erste Hinweis 16 im ersten Bedienzustand S1 und/oder der zweite Hinweis 17 im zweiten Bedienzustand S2 beispielsweise jeweils durch den vorstehend beschriebenen Glow-Effekt hervorgehoben werden.

Die Erfindung lässt neben den dargestellten Ausführungsformen weitere Gestaltungsgrundsätze zu. Das heißt, die Erfindung soll nicht auf die mit Bezug auf die Figuren erläuterten Ausführungsbeispiele beschränkt betrachtet werden.

### Bezugszeichenliste

- 10: Anzeigesystem
- 11: erstes Anzeigemittel
- 12: zweites Anzeigemittel
- 13: Bedieneinheit
- 14: Umschaltmittel
- 15: Hinweismittel
- 16: erster Hinweis
- 17: zweiter Hinweis
- 18: Betätigungsmittel
- 19: Leuchtmittel
- 20: Computerprogrammprodukt
- 21: Speichermittel
- 22: Computer
- 23: drittes Anzeigemittel
- 24: Lenkrad
- 50: Fahrzeug

- S1: erster Bedienzustand
- S2: zweiter Bedienzustand

## Patentansprüche

1. Anzeigesystem (10) für ein Fahrzeug (50), aufweisend:
- ein erstes Anzeigemittel (11) zum Anzeigen von Informationen an einem ersten Ort im Fahrzeug (50),
- ein zweites Anzeigemittel (12) zum Anzeigen von Informationen an einem zweiten, vom ersten Ort entfernten, Ort im Fahrzeug (50),
- eine Bedieneinheit (13) zum manuellen Bedienen des ersten Anzeigemittels (11) und des zweiten Anzeigemittels (12), wobei die Bedieneinheit (13) ein Umschaltmittel (14) zum Umschalten zwischen einem ersten Bedienzustand (S1), in welchem die Bedieneinheit (13) zum manuellen Bedienen des ersten Anzeigemittels (11) konfiguriert ist, und einem zweiten Bedienzustand (S2), in welchem die Bedieneinheit (13) zum manuellen Bedienen des zweiten Anzeigemittels (12) konfiguriert ist, aufweist, und
- ein Hinweismittel (15) zum Erstellen eines optisch wahrnehmbaren ersten Hinweises (16) auf dem ersten Anzeigemittel (11) zum Hinweisen auf den ersten Bedienzustand (S1) und zum Erstellen eines optisch wahrnehmbaren zweiten Hinweises (17) auf dem zweiten Anzeigemittel (12) zum Hinweisen auf den zweiten Bedienzustand (S2),
**dadurch gekennzeichnet,**
**dass** die Bedieneinheit (13) ein Betätigungsmittel (18) zum optischen Hervorheben des ersten Bedienzustandes (S1) und des zweiten Bedienzustandes (S2) durch optisches Verändern des ersten Hinweises (16) im ersten Bedienzustand (S1) und/oder des zweiten Hinweises (17) im zweiten Bedienzustand (S2) durch manuelle Betätigung des Betätigungsmittels (18) aufweist.

2. Anzeigesystem (10) nach Anspruch 1,
**dadurch gekennzeichnet,**
**dass** das Betätigungsmittel (18) zum optischen Hervorheben des ersten Bedienzustandes (S1) und des zweiten Bedienzustandes (S2) durch ein Aufleuchten des ersten Hinweises (16) im ersten Bedienzustand (S1) und/oder des zweiten Hinweises (17) im zweiten Bedienzustand (S2) durch manuelle Betätigung des Betätigungsmittels (18) konfiguriert ist.

3. Anzeigesystem (10) nach einem der voranstehenden Ansprüche,
**dadurch gekennzeichnet,**
**dass** die Bedieneinheit (13) zum Bedienen des ersten Anzeigemittels (11) und/oder zum Bedienen des zweiten Anzeigemittels (12) durch manuelles Aufbringen eines ersten Drucks auf die Bedieneinheit (13) konfiguriert ist und das Betätigungsmittel (18) zum optischen Hervorheben des ersten Bedienzustandes (S1) und des zweiten Bedienzustandes (S2) durch manuelles Aufbringen eines zweiten Drucks auf das Betätigungsmittel (18), der niedriger als der erste Druck ist, konfiguriert ist.

4. Anzeigesystem (10) nach einem der voranstehenden Ansprüche,
**dadurch gekennzeichnet,**
**dass** das Umschaltmittel (14) wenigstens ein Betätigungselement zum Umschalten zwischen den beiden Bedienzuständen (S1, S2) und das Betätigungsmittel (18) dasselbe wenigstens eine Betätigungselement zum optischen Hervorheben der Bedienzustände (S1, S2) aufweist, wobei das wenigstens eine Betätigungselement konfiguriert ist, durch manuelles Aufbringen eines ersten Drucks auf das wenigstens eine Betätigungselement zwischen den Bedienzuständen (S1, S2) umzuschalten und durch manuelles Aufbringen eines zweiten Drucks, der niedriger als der erste Druck ist, die Bedienzustände (S1, S2) optisch hervorzuheben.

5. Anzeigesystem (10) nach einem der voranstehenden Ansprüche,
**gekennzeichnet durch,**
ein vom ersten Anzeigemittel (11) und vom zweiten Anzeigemittel (12) beabstandetes drittes Anzeigemittel (23) zum Erstellen eines optisch wahrnehmbaren Hinweises zum Hinweisen auf ein Umschalten zwischen dem ersten Bedienzustand (S1) und dem zweiten Bedienzustand (S2), zum Hinweisen auf den ersten Bedienzustand (S1) und/oder zum Hinweisen auf den zweiten Bedienzustand (S2).

6. Anzeigesystem (10) nach einem der voranstehenden Ansprüche,
**gekennzeichnet durch**
ein Leuchtmittel (19) zum Erzeugen eines Lichtpfads vom ersten Anzeigemittel (11) zum zweiten Anzeigemittel (12) beim Umschalten vom ersten Anzeigemittel (11) auf das zweite Anzeigemittel (12) sowie zum Erzeugen eines Lichtpfads vom zweiten Anzeigemittel (12) zum ersten Anzeigemittel (11) beim Umschalten vom zweiten Anzeigemittel (12) auf das erste Anzeigemittel (11).

7. Fahrzeug (50) mit einem Lenkrad (24) und einem Anzeigesystem (10) nach einem der voranstehenden Ansprüche, wobei die Bedieneinheit (13) und/oder das Betätigungsmittel (18) am Lenkrad (24) installiert sind.

8. Verfahren zum optischen Hervorheben unterschiedlicher Bedienzustände (S1, S2) in einem Anzeigesystem (10) nach einem der Ansprüche 1 bis 6 in einem Fahrzeug (50), aufweisend die Schritte:
- Umschalten zwischen dem ersten Bedienzustand (S1) und dem zweiten Bedienzustand (S2) zum Erstellen eines optisch wahrnehmbaren ersten Hinweises (16) auf dem ersten Anzeigemittel (11) zum Hinweisen auf den ersten Bedienzustand (S1) oder eines optisch wahrnehmbaren zweiten Hinweises (17) auf dem zweiten Anzeigemittel (12) zum Hinweisen auf den zweiten Bedienzustand (S2), und
- optisches Verändern des ersten Hinweises (16) im ersten Bedienzustand (S1) zum optischen Hervorheben des ersten Bedienzustandes (S1) oder optisches Verändern des zweiten Hinweises (17) im zweiten Bedienzustand (S2) zum optischen Hervorheben des zweiten Bedienzustandes (S2).

9. Computerprogrammprodukt (20), umfassend Befehle, die bei der Ausführung des Computerprogrammprodukts (20) durch einen Computer (22) diesen veranlassen, das Verfahren nach Anspruch 8 unter Verwendung eines Anzeigesystems (10) nach einem der Ansprüche 1 bis 6 auszuführen.

10. Computerlesbares Speichermittel (21) mit einem darauf gespeicherten Computerprogrammprodukt (20) nach Anspruch 9.

## Claims

1. Display system (10) for a vehicle (50), the system comprising:
- a first display means (11) for displaying information at a first location in the vehicle (50),
- a second display means (12) for displaying information at a second location in the vehicle (50) remote from the first location,
- an operating unit (13) for manually operating the first display means (11) and the second display means (12), the operating unit (13) having a switching means (14) for switching between a first operating state (S1), in which the operating unit (13) is configured for manually operating the first display means (11), and a second operating state (S2), in which the operating unit (13) is configured for manually operating the second display means (12), and
- an indicating means (15) for creating a visually perceptible first indication (16) on the first display means (11) to indicate the first operating state (S1) and for creating a visually perceptible second indication (17) on the second display means (12) to indicate the second operating state (S2), **characterized in that** the operating unit (13) has an actuating means (18) for optically highlighting the first operating state (S1) and the second operating state (S2) by optically changing the first indication (16) in the first operating state (S1) and/or the second indication (17) in the second operating state (S2) by manually actuating the actuating means (18).

2. Display system (10) according to claim 1,
**characterized in that**
the actuating means (18) is configured to optically highlight the first operating state (S1) and the second operating state (S2) by lighting up the first indication (16) in the first operating state (S1) and/or the second indication (17) in the second operating state (S2) by manually actuating the actuating means (18).

3. Display system (10) according to either of the preceding claims,
**characterized in that**
the operating unit (13) is configured to operate the first display means (11) and/or to operate the second display means (12) by manually applying a first pressure to the operating unit (13), and the actuating means (18) is configured to optically highlight the first operating state (S1) and the second operating state (S2) by manually applying a second pressure to the actuating means (18) which is lower than the first pressure.

4. Display system (10) according to any of the preceding claims,
**characterized in that**
the switching means (14) has at least one actuating element for switching between the two operating states (S1, S2) and the actuating means (18) has the same at least one actuating element for optically highlighting the operating states (S1, S2), the at least one actuating element being configured to switch between the operating states (S1, S2) by manually applying a first pressure to the at least one actuating element and to optically highlight the operating states (S1, S2) by manually applying a second pressure which is lower than the first pressure.

5. Display system (10) according to any of the preceding claims,
**characterized by**
a third display means (23), spaced apart from the first display means (11) and the second display means (12), for creating a visually perceptible indication to indicate a switchover between the first operating state (S1) and the second operating state (S2), to indicate the first operating state (S1) and/or to indicate the second operating state (S2).

6. Display system (10) according to any of the preceding claims,
**characterized by**
a lighting means (19) for generating a light path from the first display means (11) to the second display means (12) when switching from the first display means (11) to the second display means (12) and for generating a light path from the second display means (12) to the first display means (11) when switching from the second display means (12) to the first display means (11).

7. Vehicle (50) comprising a steering wheel (24) and a display system (10) according to any of the preceding claims, wherein the operating unit (13) and/or the actuating means (18) are installed on the steering wheel (24).

8. Method for optically highlighting different operating states (S1, S2) in a display system (10) according to any of claims 1 to 6 in a vehicle (50), comprising the steps of:
- switching between the first operating state (S1) and the second operating state (S2) to create a visually perceptible first indication (16) on the first display means (11) to indicate the first operating state (S1) or a visually perceptible second indication (17) on the second display means (12) to indicate the second operating state (S2), and
- optically changing the first indication (16) in the first operating state (S1) to optically highlight the first operating state (S1) or optically changing the second indication (17) in the second operating state (S2) to optically highlight the second operating state (S2).

9. Computer program product (20) comprising commands which, when the computer program product (20) is executed by a computer (22), cause the computer to carry out the method according to claim 8 using a display system (10) according to any of claims 1 to 6.

10. Computer-readable storage means (21) having a computer program product (20) according to claim 9 stored thereon.

## Revendications

1. Système d'affichage (10) pour un véhicule (50), présentant :
- un premier moyen d'affichage (11) pour l'affichage d'informations au niveau d'un premier emplacement dans le véhicule (50),
- un deuxième moyen d'affichage (12) pour l'affichage d'informations au niveau d'un second emplacement, éloigné du premier emplacement, dans le véhicule (50),
- une unité de manipulation (13) pour la manipulation manuelle du premier moyen d'affichage (11) et du deuxième moyen d'affichage (12), dans lequel l'unité de manipulation (13) présente un moyen de commutation (14) permettant de commuter entre un premier état de manipulation (S1) dans lequel l'unité de manipulation (13) est configurée pour la manipulation manuelle du premier moyen d'affichage (11), et un second état de manipulation (S2) dans lequel l'unité de manipulation (13) est configurée pour la manipulation manuelle du deuxième moyen d'affichage (12), et
- un moyen d'indication (15) pour la création d'une première indication (16) optiquement perceptible sur le premier moyen d'affichage (11) pour l'indication du premier état de manipulation (S1) et pour créer une seconde indication (17) optiquement perceptible sur le deuxième moyen d'affichage (12) pour indiquer le second état de manipulation (S2), **caractérisé en ce que** l'unité de manipulation (13) présente un moyen d'actionnement (18) pour la mise en évidence optique du premier état de manipulation (S1) et du second état de manipulation (S2) en modifiant optiquement la première indication (16) dans le premier état de manipulation (S1) et/ou la seconde indication (17) dans le second état de manipulation (S2) en actionnant manuellement le moyen d'actionnement (18).

2. Système d'affichage (10) selon la revendication 1,
**caractérisé en ce**
**que** le moyen d'actionnement (18) est configuré pour mettre en évidence optiquement le premier état de manipulation (S1) et le second état de manipulation (S2) en allumant la première indication (16) dans le premier état de manipulation (S1) et/ou la seconde indication (17) dans le second état de manipulation (S2) en actionnant manuellement le moyen d'actionnement (18).

3. Système d'affichage (10) selon l'une des revendications précédentes,
**caractérisé en ce**
**que** l'unité de manipulation (13) est configurée pour la manipulation du premier moyen d'affichage (11) et/ou pour la manipulation du deuxième moyen d'affichage (12) en appliquant manuellement une première pression sur l'unité de manipulation (13), et le moyen d'actionnement (18) est configuré pour mettre en évidence optiquement le premier état de manipulation (S1) et le second état de manipulation (S2) en appliquant manuellement une seconde pression sur le moyen d'actionnement (18), laquelle est inférieure à la première pression.

4. Système d'affichage (10) selon l'une des revendications précédentes,
**caractérisé en ce**
**que** le moyen de commutation (14) présente au moins un élément d'actionnement pour la commutation entre les deux états de manipulation (S1, S2) et le moyen d'actionnement (18) présente le même au moins un élément d'actionnement pour la mise en évidence optique des états de manipulation (S1, S2), dans lequel l'au moins un élément d'actionnement est configuré pour commuter entre les états de manipulation (S1, S2) en appliquant manuellement une première pression sur l'au moins un élément d'actionnement et pour la mise en évidence optique des états de manipulation (S1, S2) en appliquant manuellement une seconde pression qui est inférieure à la première pression.

5. Système d'affichage (10) selon l'une des revendications précédentes,
**caractérisé par,**
un troisième moyen d'affichage (23) espacé du premier moyen d'affichage (11) et du deuxième moyen d'affichage (12) pour la création d'une indication optiquement perceptible pour l'indication d'une commutation entre le premier état de manipulation (S1) et le second état de manipulation (S2), pour l'indication du premier état de manipulation (S1) et/ou pour l'indication du second état de manipulation (S2).

6. Système d'affichage (10) selon l'une des revendications précédentes,
**caractérisé par**
un moyen d'éclairage (19) pour la génération d'un trajet lumineux depuis le premier moyen d'affichage (11) vers le deuxième moyen d'affichage (12) lors de la commutation du premier moyen d'affichage (11) vers le deuxième moyen d'affichage (12) ainsi que pour la génération d'un trajet lumineux depuis le deuxième moyen d'affichage (12) vers le premier moyen d'affichage (11) lors de la commutation du deuxième moyen d'affichage (12) vers le premier moyen d'affichage (11).

7. Véhicule (50) comportant un volant (24) et un système d'affichage (10) selon l'une des revendications précédentes, dans lequel l'unité de manipulation (13) et/ou le moyen d'actionnement (18) sont installés sur le volant (24).

8. Procédé pour la mise en évidence optique de différents états de manipulation (S1, S2) dans un système d'affichage (10) selon l'une des revendications 1 à 6 dans un véhicule (50), présentant les étapes consistant à :
- commuter entre le premier état de manipulation (S1) et le second état de manipulation (S2) pour la création d'une première indication (16) optiquement perceptible sur le premier moyen d'affichage (11) pour l'indication du premier état de manipulation (S1) ou une seconde indication (17) optiquement perceptible sur le deuxième moyen d'affichage (12) pour l'indication du second état de manipulation (S2), et
- modifier optiquement la première indication (16) dans le premier état de manipulation (S1) pour la mise en évidence optique du premier état de manipulation (S1) ou modifier optiquement la seconde indication (17) dans le second état de manipulation (S2) pour la mise en évidence optique du second état de manipulation (S2).

9. Produit programme informatique (20), comprenant des instructions qui, lors de l'exécution du produit programme informatique (20) par un ordinateur (22), amènent celui-ci à exécuter le procédé selon la revendication 8 à l'aide d'un système d'affichage (10) selon l'une des revendications 1 à 6.

10. Moyen de stockage lisible par ordinateur (21) sur lequel est stocké un produit programme informatique (20) selon la revendication 9.
